# EUROPÄISCHE PATENTSCHRIFT

(11) **EP 1 604 329 B1**
(45) Veröffentlichungstag und Bekanntmachung des Hinweises auf die Patenterteilung: **12.11.2008**
(21) Anmeldenummer: 04718909.7
(22) Anmeldetag: 10.03.2004
(51) Int. Cl.: G06K 19/07

(54) **CHIPKARTE**
CHIP CARD
CARTE A PUCE

(30) Priorität: 18.03.2003 DE 10311966
(43) Veröffentlichungstag der Anmeldung: 14.12.2005
(73) Patentinhaber: Infineon Technologies AG, 81669 München (DE)
(72) Erfinder: KARGL, Walter, A-8020 Graz (AT)
(74) Vertreter: Epping - Hermann - Fischer
(86) Internationale Anmeldenummer: PCT/DE2004/000467
(87) Internationale Veröffentlichungsnummer: WO 2004/084126

(56) Entgegenhaltungen:
- US-A- 6 003 777
- US-A- 6 045 043

## Beschreibung

Die Erfindung betrifft eine Chipkarte mit einer kontaktlosen Schnittstelle und einer kontaktbehafteten Schnittstelle, wobei über jede der Schnittstellen Energie und Daten übertragbar sind, und in einer ersten Betriebsart nur die kontaktbehaftete Schnittstelle in Betrieb ist, in einer zweiten Betriebsart nur die kontaktlose Schnittstelle in Betrieb ist und in einer dritten Betriebsart die kontaktlose und die kontaktbehaftete Schnittstelle in Betrieb sind.

Derartige Chipkarten sind unter der Bezeichnung "Dual Interface-Chipkarten" bekannt. In der kontaktbehafteten Betriebsart verhält sich eine solche Chipkarte wie eine herkömmliche kontaktbehaftete Chipkarte, d. h. die Energieversorgung und der Datenaustausch erfolgt über Kontaktflächen auf der Oberfläche der Karte, die mit entsprechenden Gegenkontakten in einem Schreib-/Lesegerät angeordnet sind, zusammen. In der kontaktlosen Betriebsart verhält sich eine Dual Interface-Chipkarte wie eine bekannte kontaktlose Chipkarte, d. h. sowohl die Energie als auch der Datenaustausch erfolgt über eine Antenne, beispielsweise eine Schleifenantenne, so daß auf der Chipkarte keine zusätzliche Energieversorgung vorgesehen werden muß zum Betrieb der elektrischen Komponenten. Eine derartige Dual-Interface-Chipkarte ist beispielsweise aus der US 6,003,777 bekannt.

Bei den Dual-Face-Chipkarten wird je nach dem Schreib/Lesegerät, mit dem kommuniziert werden soll, zwischen der ersten und der zweiten Betriebsart umgeschaltet. In der kontaktbehafteten Betriebsart erfolgt also sowohl die Energieversorgung als auch der Datenverkehr über die kontaktbehaftete Schnittstelle, während in der kontaktlosen zweiten Betriebsart die Energieversorgung und der Datenaustausch über die kontaktlose Schnittstelle erfolgen.

Ein beispielhafter Einsatz einer solchen Chipkarte ist in Mobiltelefonen, wo die Karte einerseits als SIM-Karte eingesetzt wird und andererseits über die kontaktlose Schnittstelle zusätzliche Funktionen implementiert sind wie die Durchführung einer Authentifikation gegenüber einem Bankautomaten oder einem Computersystem, wobei diese Geräte kontaktlose Schnittstellen besitzen zur Kommunikation mit der Chipkarte des Mobiltelefons.

Problematisch ist dabei, daß in der zweiten, kontaktlos arbeitenden Betriebsart die Reichweite dadurch begrenzt ist, daß für den Betrieb der Chipkarte verhältnismäßig viel Leistung erforderlich ist und daher eine fehlerfreie Datenübertragung nicht mehr gewährleistet ist, wenn das Feld des Schreib-/Lesegerätes verhältnismäßig schwach ist.

Aufgabe der Erfindung ist es daher, eine Dual Interface-Chipkarte anzugeben, die auch in der kontaktlosen Betriebsart eine hohe Reichweite besitzt.

Diese Aufgabe wird erfindungsgemäß durch eine Chipkarte der eingangs genannten Art gelöst, die dadurch gekennzeichnet ist, ein gemeinsames Spannungsversorgungsnetz und eine Spannungsversorgungssteuerung vorgesehen sind, wobei die Spannungsversorgungssteuerung in der Lage ist, das Spannungsversorgungsnetz entweder mit einer der beiden Schnittstellen zu verbinden oder mit beiden Schnittstellen zu verbinden. Ferner ist eine Betriebsartensteuerung vorgesehen, die die Funktion der Spannungsversorgungssteuerung bestimmt. Die Chipkarte ist derart ausgebildet, dass in einer Dual-Betriebsart Daten über die kontaktlose Schnittstelle übertragen werden, die Energieversorgung der zweiten Verbraucher über die kontaktlose Schnittstelle erfolgt, die Energieversorgung der dritten

Verbraucher, die unabhängig von der verwendeten Schnittstelle in Betrieb sind, über die kontaktbehaftete Schnittstelle erfolgt und die ersten Verbraucher über die kontaktbehaftete Schnittstelle mit Energie versorgt werden oder nicht versorgt werden.

In der dritten Betriebsart der erfindungsgemäßen Chipkarte ist also ein gemischter Betrieb vorgesehen, bei dem die Energie über die kontaktbehaftete Schnittstelle bezogen wird, während der Datenaustausch über die kontaktlose Schnittstelle erfolgt. Die der kontaktlosen Schnittstelle zur Verfügung gestellte Energie über das Feld des Schreib-/Lesegerätes kann somit nahezu vollständig für den Datenaustausch verwendet werden. Der Leistungsbedarf der zweiten Verbraucher ist sehr gering und beeinträchtigt die Datenübertragung über die kontaktlose Schnittstelle nur unwesentlich. Ein weiterer Vorteil besteht darin, daß bei der kontaktlosen Schnittstelle höhere Schwingkreisgüten verwendet werden können und somit bessere Reichweiten erzielt werden. Ein weiterer Vorteil besteht darin, daß in der kontaktlosen Betriebsart eine Entkopplung der Versorgungs- und Kommunikationsenergie gegeben ist. Daraus folgt eine bessere CPU-Geräuschunterdrückung während des kontaktlosen Betriebs, da Störungen aus der CPU nicht über die Versorgungsleitungen zur kontaktlosen Schnittstelle übertragen werden können.

Besonders günstig ist, daß die Modulation im Datenverkehr zwischen der Chipkarte und dem Schreib-/Lesegerät optioniert werden kann, ohne daß die Energieversorgung gefährdet ist. Insbesondere kann eine ASK-100%-Modulation verwendet werden.

In vorteilhaften Ausführungen sind zusätzlich eine rein kontaktbehaftete Betriebsart und eine rein kontaktlose Betriebsart vorgesehen, in denen jeweils Energie und Daten über die gleiche Schnittstelle übertragen werden.

Die Erfindung wird nachfolgend anhand eines Ausführungsbeispiels näher erläutert. Die Figur zeigt ein Blockschaltbild einer erfindungsgemäßen Chipkarte.

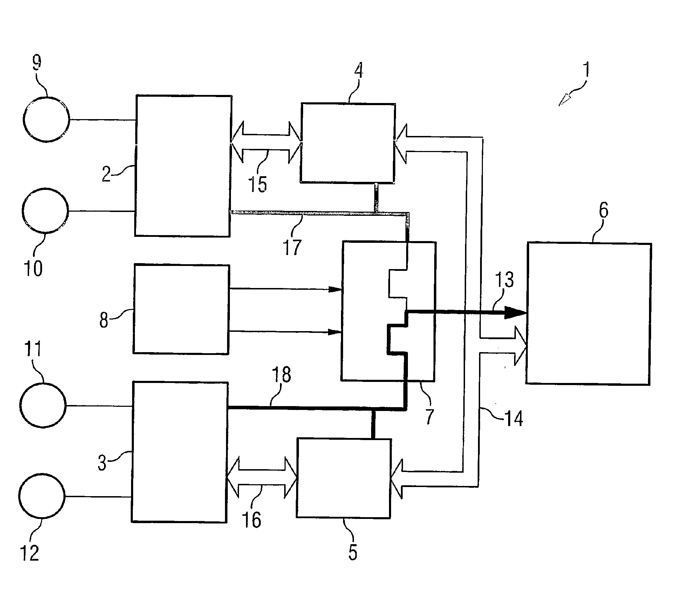

Das in der Figur 1 dargestellte Blockschaltbild einer Chipkarte 1 zeigt die für die vorliegende Erfindung vorliegenden wesentlichen Komponenten. Eine Datenverarbeitungseinheit 6 bildet einen Karren, in dem empfangene Daten verarbeitet bzw. zu sendende Daten bereitgestellt werden. Die Datenverarbeitungseinheit 6 ist über einen Daten-BUS 14 mit zwei Schnittstellen 2 und 3 verbunden, wobei eine der Schnittstellen eine kontaktlose Schnittstelle 2 und die andere Schnittstelle eine kontaktbehaftete Schnittstelle 3 ist. Zwischen die Datenverarbeitungseinheit 6 und die Schnittstellen 2 und 3 sind Levelshifter 4 und 5 geschaltet, die für eine Anpassung des Spannungspegels zwischen den Schnittstellen und der Datenverarbeitungseinheit 6 dienen. Der Levelshifter 4 ist der kontaktlosen Schnittstelle 2 zugeordnet und der Levelshifter 5 ist der kontaktbehafteten Schnittstelle 3 zugeordnet. Über Datenleitungen 16 und 17 sind die Levelshifter mit der jeweiligen Schnittstelle 2 und 3 verbunden.

Auf die kontaktlose Schnittstelle 2 kann über eine Antenne zugegriffen werden, die mit Anschlüssen 9 und 10 mit der kontaktlosen Schnittstelle 2 verbunden ist. Auf die kontaktbehaftete Schnittstelle 3 wird über einen Spannungsversorgungsanschluß 12 und über Daten-Anschlüsse 11 zugegriffen. In einer konkreten Ausführung erfolgt die Spannungsversorgung selbstverständlich über zwei Kontakte 12 und auch für die Datenübertragung sind mehrere Kontakte 11 vorgesehen.

Die Datenverarbeitungseinheit 6 ist mit einem Spannungsversorgungsnetz 13 verbunden, über das sie mit der zum Betrieb notwendigen Energie versorgt wird. Die Einspeisung von Energie in das Spannungsversorgungsnetz 13 kann sowohl über die kontaktbehaftete Schnittstelle 3 als auch über die kontaktlose Schnittstelle 2 erfolgen. Zu diesem Zweck ist eine Spannungsversorgungssteuerung 7 vorgesehen, die einerseits mit dem Spannungsversorgungsnetz 13 und andererseits mit den Schnittstellen 2 und 3 verbunden ist. Spannungsversorgungsleitungen 17 und 18, die die Spannungsversorgungssteuerung mit den Schnittstellen 2 bzw. 3 verbinden, sind darüber hinaus mit den Levelshiftern 4 und 5 verbunden.

Die Spannungsversorgungssteuerung 7 ist in der Lage, das Spannungsversorgungsnetz 13 entweder mit einer der Schnittstellen 2 und 3 zu verbinden oder aber auch beide Schnittstellen 2 und 3 mit dem Spannungsversorgungsnetz 13 zu verbinden. Darüber hinaus sind Regelungsfunktionen implementiert, die die von den Schnittstellen gelieferte Spannung auf das zum Betrieb der Datenverarbeitungseinheit 6 erforderliche Niveau regeln. Die Funktion der Spannungsversorgungssteuerung wird von einer Betriebsartensteuerung 8 bestimmt, die dazu mit der Spannungsversorgungssteuerung 7 verbunden ist.

In dem dargestellten Betriebsfall befindet sich die Chipkarte in der Dual-Betriebsart. Von der kontaktlosen Schnittstelle 2 empfangene Daten können über den Levelshifter 4 zu der Datenverarbeitungseinheit gelangen bzw. umgekehrt von der Datenverarbeitungseinheit gesendet werden. Der Levelshifter 4 bildet einen zweiten Verbraucher, der nur der kontaktlosen Schnittstelle 2 zugeordnet ist. Er wird nur benötigt, wenn auch Daten über die kontaktlose Schnittstelle 2 übertragen werden sollen. In einer rein kontaktbehafteten Betriebsweise muß dieser zweite Verbraucher nicht mit Energie versorgt werden.

Der zweite Levelshifter 2 bildet einen ersten Verbraucher, der nur der kontaktbehafteten Schnittstelle 3 zugeordnet ist, d. h. nur dann benötigt wird, wenn über die kontaktbehaftete Schnittstelle auch Daten übertragen werden sollen.

Die Datenverarbeitungseinheit 6 bildet einen dritten Verbraucher, der unabhängig von der gewählten Betriebsart mit Energie versorgt werden muß.

In der dargestellten Dual-Betriebsart sollen, wie beschrieben, Daten über die kontaktlose Schnittstelle übertragen werden. Würde die für die Datenverarbeitungseinheit benötigte Energie ebenfalls über die kontaktlose Schnittstelle 2 bereitgestellt werden, wäre dies mit Einschränkungen für die Datenübertragung verbunden, beispielsweise würde eine ASK-100%-Modulation die Energieversorgung derart beeinträchtigen, daß die Datenverarbeitungseinheit 6 nicht mehr ausreichend mit Energie versorgt werden könnte. Daher wird oft eine geringere Modulationstiefe verwendet, beispielsweise eine ASK-10%-Modulation. Bei dieser Modulationsart wird zwar ausreichend Energie für die Datenverarbeitungseinheit 6 bereitgestellt, jedoch ist die Kennung des Datensignales wesentlich schwieriger und es muß mit einer geringeren Reichweite gerechnet werden.

In der Dual-Betriebsart erfolgt jedoch nur eine Energieversorgung des Levelshifters 4 über die kontaktlose Schnittstelle 2. Die Spannungsversorgungssteuerung entkoppelt die Spannungsversorgungsleitung 17 von dem Spannungsversorgungsnetz 13. Der Erkenntnis folgend, daß bei Datenübertragung über die kontaktlose Schnittstelle 2 in vielen Fällen trotzdem eine Spannungsversorgung über die kontaktbehaftete Schnittstelle 3 erfolgen kann, verbindet die Spannungsversorgungssteuerung 7 das Spannungsversorgungsnetz 13 über die Spannungsversorgungsleitung 18 mit der kontaktbehafteten Schnittstelle 3. Die miteinander in Verbindung stehenden Leitungsabschnitte sind durch die fette Darstellung erkennbar. In der Dual-Betriebsart gemäß der Erfindung ist somit die Spannungsversorgung der Datenverarbeitungseinheit 6 und anderer gemeinsam genutzter Verbraucher sichergestellt und gleichzeitig die Datenübertragung über die kontaktlose Schnittstelle 2 optimierbar.

In dem dargestellten Ausführungsbeispiel ist es sehr einfach, auch eine andere Betriebsart einzustellen, also eine rein kontaktbehaftete Betriebsart oder eine rein kontaktlose Betriebsart. Bei der rein kontaktlosen Betriebsart würde die Spannungsversorgungssteuerung 7 das Spannungsversorgungsnetz 13 ebenfalls mit der kontaktlosen Schnittstelle 2 verbinden. In der kontaktbehafteten Betriebsart würde sowohl Daten- als auch Energieübertragung über die kontaktbehaftete Schnittstelle 3 erfolgen.

In der obigen Betrachtung wurde davon ausgegangen, daß in der Dual-Betriebsart über die kontaktlose Schnittstelle 2 nur Daten und über die kontaktbehaftete Schnittstelle 3 nur Energie übertragen wird. Die Energieversorgung des Levelshifters 5 war daher ohne Bedeutung. Die Dual-Betriebsart kann auch so erweitert werden, daß Daten sowohl über die kontaktlose als auch die kontaktbehaftete Schnittstelle übertragen werden, während die Energie nur über die kontaktbehaftete Schnittstelle 3 bezogen wird. In diesem Fall erfolgt also die Energieversorgung des Levelshifters 5, der einen ersten Verbraucher bildet, ebenfalls über die kontaktbehaftete Schnittstelle.

Die Gruppen der ersten, zweiten und dritten Verbraucher sind selbstverständlich nicht auf die dargestellten Komponenten beschränkt, sondern diesen Verbrauchergruppen können auch andere Komponenten zugeordnet werden. Bei der Zuordnung kommt es lediglich darauf an, ob die zuzuordnende Komponente nur in der rein kontaktlosen Betriebsart verwendet wird, nur in der kontaktbehafteten Betriebsart oder unabhängig von der gewählten Betriebsart immer erforderlich ist.

### Bezugszeichenliste

- 1: Chipkarte
- 2: kontaktlose Schnittstelle
- 3: kontaktbehaftete Schnittstelle
- 4: erster Levelshifter
- 5: zweiter Levelshifter
- 6: Datenverarbeitungseinheit
- 7: Spannungsversorgungssteuerung
- 8: Betriebsartensteuerung
- 9, 10: Anschlüsse der kontaktlosen Schnittstelle
- 11, 12: Anschlüsse der kontaktbehafteten Schnittstelle
- 13: Spannungsversorgungsnetz
- 14: Daten-BUS
- 15, 16: Datenleitungen
- 17: Spannungsversorgungsleitung
- 18: Spannungsversorgungsleitung

## Patentansprüche

1. Chipkarte (1)
mit einer kontaktbehafteten Schnittstelle (3) mit dieser zugeordneten ersten Verbrauchern (5),
einer kontaktlosen Schnittstelle (2) mit dieser zugeordneten zweiten Verbrauchern (4),
wobei über jede der Schnittstellen (2, 3) Energie und Daten übertragbar sind, wobei
- ein gemeinsames Spannungsversorgungsnetz (13) vorgesehen ist,
- eine Spannungsversorgungssteuerung (7) vorgesehen ist, die in der Lage ist, das Spannungsversorgungsnetz (13) entweder mit einer der beiden Schnittstellen (2, 3) zu verbinden oder mit beiden Schnittstellen (2, 3) zu verbinden, und
- eine Betriebsartensteuerung (8) vorsehen ist, die die Funktion der Spannungsversorgungssteuerung (7) bestimmt,
wobei die Chipkarte derart ausgebildet ist, dass in einer Dual-Betriebsart Daten über die kontaktlose Schnittstelle (2) übertragen werden, die Energieversorgung der zweiten Verbraucher (4) über die kontaktlose Schnittstelle (2) erfolgt, die Energieversorgung der dritten Verbraucher (6), die unabhängig von der verwendeten Schnittstelle (2, 3) in Betrieb sind, über die kontaktbehaftete Schnittstelle (3) erfolgt und die ersten Verbraucher (5) über die kontaktbehaftete Schnittstelle (3) mit Energie versorgt werden oder nicht versorgt werden.

2. Chipkarte nach Anspruch 1,
**dadurch gekennzeichnet, daß**
in der Dual-Betriebsart eine Einspeisung von Energie aus der kontaktlosen Schnittstelle (2) in das Spannungsversorgungsnetz (13) verhindert ist.

3. Chipkarte nach Anspruch 1 oder 2,
**dadurch gekennzeichnet, daß** die Chipkarte derart ausgebildet ist, dass in einer kontaktbehafteten Betriebsart Daten und Energie nur über die kontaktbehaftete Schnittstelle (3) übertragen werden.

4. Chipkarte nach einem der Ansprüche 1 bis 3,
**dadurch gekennzeichnet, daß** die Chipkarte derart ausgebildet ist, dass in einer rein kontaktlosen Betriebsart sowohl Daten als auch Energie nur über die kontaktlose Schnittstelle (2) übertragen werden.

## Claims

1. Chip card (1)
comprising a contact-type interface (3) with first loads (5) associated with it,
a contactless interface (2) with second loads (4) associated with it,
each of the interfaces (2, 3) being able to be used to transmit power and data,
- a common power supply network (13) being provided,
- a power supply controller (7) being provided which is capable of connecting the power supply network (13) either to one of the two interfaces (2, 3) or to both interfaces (2, 3), and
- a mode-of-operation controller (8) being provided which determines the operation of the power supply controller (7),
the chip card being designed such that in a dual mode of operation data are transmitted via the contactless interface (2), the second loads (4) are supplied with power via the contactless interface (2), the third loads (6), which are in operation regardless of the interface (2, 3) used, are supplied with power via the contact-type interface (3) and the first loads (5) are supplied or not supplied with power via the contact-type interface (3).

2. Chip card according to Claim 1,
**characterized in that**
the dual mode of operation prevents power from being supplied from the contactless interface (2) to the power supply network (13).

3. Chip card according to Claim 1 or 2,
**characterized in that** the chip card is designed such that in a contact-type mode of operation data and power are transmitted only via the contact-type interface (3).

4. Chip card according to one of Claims 1 to 3,
**characterized in that**
the chip card is designed such that in a purely contactless mode of operation both data and power are transmitted only via the contactless interface (2).

## Revendications

1. Carte (1) à puce
comprenant une interface (3) à contact ayant des premiers consommateurs (5) qui lui sont associés,
une interface (2) sans contact ayant des deuxièmes consommateurs (4) qui lui sont associés,
de l'énergie et des données pouvant être transmises par chacune des interfaces (2, 3), dans laquelle
- il est prévu un réseau (13) commun d'alimentation en tension,
- il est prévu une commande (7) de l'alimentation en tension, qui est en mesure de relier le réseau (13) d'alimentation en tension à l'une ou l'autre des deux interfaces (2, 3) ou de le relier aux deux interfaces (2, 3) et
- il est prévu une commande (8) du type de fonctionnement, qui détermine le fonctionnement de la commande (7) d'alimentation en tension,
dans laquelle la carte à puce est telle que, dans un type de fonctionnement dual, des données sont transmises par l'interface (2) sans contact, l'alimentation en énergie des deuxièmes consommateurs (4) s'effectuant par l'interface (2) sans contact, l'alimentation en énergie des troisièmes consommateurs (6), qui sont en fonctionnement indépendamment de l'interface (2, 3) utilisée, s'effectue par l'interface (3) à contact et les premiers condensateurs (5) sont alimentés en énergie ou ne le sont pas par l'interface (3) à contact.

2. Carte à puce suivant la revendication 1,
**caractérisée en ce que** dans le type de fonctionnement dual, une injection d'énergie de l'interface (2) sans contact au réseau (13) d'alimentation en tension est empêchée.

3. Carte à puce suivant la revendication 1 ou 2,
**caractérisée en ce que** la carte à puce est telle que, dans un type de fonctionnement à contact, des données et de l'énergie sont transmises seulement par l'interface (3) à contact.

4. Carte à puce suivant l'une des revendications 1 à 3,
**caractérisée en ce que** la carte à puce est telle que, dans un type de fonctionnement purement sans contact, tant des données qu'également de l'énergie ne sont transmises que par l'interface (2) sans contact.
